# EUROPÄISCHE PATENTANMELDUNG

(11) **EP 1 380 486 A1**
(43) Veröffentlichungstag der Anmeldung: **14.01.2004**
(21) Anmeldenummer: 03014783.9
(22) Anmeldetag: 28.06.2003
(51) Int. Cl.: B60T 11/26

(54) **Behälter für eine hydraulische Bremsanlage**

(30) Priorität: 06.07.2002 DE 10230431
(71) Anmelder: DaimlerChrysler AG, 70567 Stuttgart (DE)
(72) Erfinder: Papenhagen, Dieter, 71364 Winnenden (DE); Schumann, Falk, 71111 Waldenbuch (DE)

(57) **Zusammenfassung**

Die Erfindung bezieht sich auf einen Behälter 3 zur Aufnahme von Flüssigkeit zur Versorgung einer hydraulisch verstellbaren Kupplung 10 und mindestens eines weiteren Aggregats, wobei die Kupplung über mindestens eine Versorgungsleitung 27 mit dem Behälter 3 verbunden ist und der Behälter 3 zur Aufnahme von Flüssigkeit 4 über die Versorgungsleitung 23 und über einen in die Versorgungsleitung 23 integrierten Vorratsbehälter 28 mit dem Kupplungssystem 10 verbunden ist, wobei die Versorgungsleitung 23 derart an den Behälter 3 angeschlossen ist, dass Flüssigkeit über diese Leitung nur zufließen, jedoch nicht abfließen kann.

## Beschreibung

Die Erfindung bezieht sich auf einen Behälter zur Aufnahme von Flüssigkeit zur Versorgung einer hydraulisch verstellbaren Kupplung und mindestens eines weiteren Aggregats, wobei die Kupplung über mindestens eine Versorgungsleitung mit dem Behälter verbunden ist.

Es ist bereits ein Ausgleichsbehälter für eine hydraulische Bremsanlage mit einem Anschluss für einen Geberzylinder einer Kupplung bekannt (DE 40 29 931 A), wobei nach Belagverschleiß der Kupplung Druckmittel freigegeben wird. Hierzu steht ein Anschluss für den Kupplungsgeberzylinder über mindestens ein zweiteiliges Kammersystem mit dem übrigen Behältervolumen in Verbindung, wobei die erste Kammer, in welche der Anschluss für den Kupplungsgeberzylinder mündet, höchstens ein Viertel der zweiten Kammer fasst, welche unmittelbar an sie anschließt und mit der sie über einen ersten Überlauf verbunden ist. Durch diese Anordnung soll bei defekter Zuleitung zum Kupplungsgeberzylinder erreicht werden, dass ein Auslaufen unter den minimal zulässigen Füllstand verhindert wird.

Demgegenüber liegt der Erfindung die Aufgabe zugrunde, den Behälter und die zugehörige Versorgungsleitung zwischen dem Behälter und dem Kupplungssystem bzw. weiteren Aggregaten derart zu gestalten, dass bei einer Umwälzung der Druckflüssigkeit eine Vermischung der Bremsflüssigkeit aus dem Kupplungssystem mit der Bremsflüssigkeit aus dem Bremssystem verhindert wird.

Gelöst wird die Aufgabe erfindungsgemäß dadurch, dass der Behälter zur Aufnahme von Flüssigkeit über die Versorgungsleitung und über einen in die Versorgungsleitung integrierten Vorratsbehälter mit der Kupplung verbunden ist, wobei die Versorgungsleitung derart an den Behälter angeschlossen ist, dass Flüssigkeit über diese Versorgungsleitung nur zufließen, jedoch nicht abfließen kann. Durch die besondere Gestaltung der Versorgungsleitung bzw. der Nachlaufleitung zwischen dem Ausgleichsbehälter und der hydraulischen Einrichtung des Kupplungssystems wird sichergestellt, dass zwar Druckflüssigkeit aus dem Kupplungssystem in den Ausgleichsbehälter abfließen kann, ohne dass diese Flüssigkeit über die Nachlaufleitung wieder zurück in das Kupplungssystem fließt. Hierzu ist in vorteilhafter Weise die hydraulische Einrichtung der Kupplung über die Versorgungsleitung und über die in der Versorgungsleitung integrierten Vorratsbehälter mit dem Ausgleichsbehälter verbunden. Tritt beispielsweise Verschleiß innerhalb der Kupplung auf, so kann über die in die Versorgungsleitung integrierten Vorratsbehälter ausreichend Druckmittelflüssigkeit zum Kupplungssystem nachfließen, ohne dass hier die Flüssigkeit aus dem Ausgleichsbehälter benötigt wird.

Hierzu ist es vorteilhaft, dass die Versorgungsleitung eine Auslassöffnung aufweist, die oberhalb des höchsten Stands der Flüssigkeit endet, wobei mindestens eine weitere Versorgungsleitung mit einer Bremsanlage verbunden ist, wobei die Auslassöffnung der Versorgungsleitung stets unterhalb des Flüssigkeitsspiegels liegt.

Da die Versorgungsleitung mit ihrer Auslassöffnung oberhalb des höchsten Stands des Flüssigkeitsspiegels des Flüssigkeitsmediums im Ausgleichsbehälter endet, kann lediglich Flüssigkeit über die Versorgungs- bzw. Nachlaufleitung in den Ausgleichsbehälter gelangen und keine Flüssigkeit mehr aus dem Ausgleichsbehälter über die Versorgungsleitung zur Kupplung zurückfließen. An den Ausgleichsbehälter können auch weitere Aggregate, beispielsweise die Bremsanlage, angeschlossen werden, wobei die Versorgungsleitung bzw. Nachlaufleitung mit ihrer Auslassöffnung stets im Flüssigkeitsmedium endet, so dass über den Ausgleichsbehälter wieder Flüssigkeit zur Bremsanlage zurückfließen kann, wenn diese benötigt wird.

Eine zusätzliche Möglichkeit ist gemäß einer Weiterbildung, dass der Vorratsbehälter zwischen der Auslassöffnung der Versorgungsleitung bzw. Nachlaufleitung und einem Geberzylinder zur Druckmittelversorgung der Kupplung vorgesehen ist.

Ferner ist es vorteilhaft, dass die Versorgungsleitung über eine am Geberzylinder vorgesehene Drosselöffnung mit dem Geberzylinder verbunden ist.

Vorteilhaft ist es hierzu auch, dass in der Versorgungsleitung ein Einwegventil vorgesehen ist, das nur in einer Strömungsrichtung öffnet.

Gemäß einer bevorzugten Ausführungsform der erfindungsgemäßen Lösung ist schließlich vorgesehen, dass der in der Versorgungsleitung integrierte Vorratsbehälter als Leitungserweiterung ausgebildet ist, deren Fassungsvermögen der Flüssigkeits-Verlustmenge entspricht, die sich durch den Kupplungsverschleiß ergibt.

Von besonderer Bedeutung ist für die vorliegende Erfindung, dass die Versorgungsleitung über den Geberzylinder mit einer Druckmittelleitung verbunden ist, die zur Druckmittelversorgung mit einer hydraulisch betätigbaren Ausrückeinrichtung für die Kupplung verbunden ist, wobei der Querschnitt der Drosselbohrung wesentlich kleiner ist als der Einlassquerschnitt der an die Ausrückeinrichtung angeschlossenen Druckmittelleitung. Da der Querschnitt der Drosselbohrung wesentlich kleiner ist als der Einlassquerschnitt der an die Ausrückeinrichtung angeschlossenen Druckmittelleitung, kann nur ein reduziertes Volumen aus dem Geberzylinder in den Ausgleichsbehälter abfließen. Erst wenn der Kolben des Geberzylinders die Drosselbohrung passiert hat, kann sich im Geberzylinder Druck aufbauen und die Kupplung betätigt werden. Durch diese Einrichtung wird also sichergestellt, dass bei Verwendung eines gemeinsamen Ausgleichsbehälters für verschiedene Druckmittelkreisläufe und zur Beschickung verschiedener Aggregate sich die Druckflüssigkeit aus dem Kupplungssystem nicht mit der Druckflüssigkeit aus den anderen Aggregaten vermischen kann. Ferner wird durch diese Anlage sichergestellt, dass bei Verschleiß das Arbeitsvolumen für die Kupplungsbetätigung ausschließlich aus dem in der Versorgungsleitung vorgesehenen Vorratsbehälter versorgt wird, so dass ein Eintritt von Fremdpartikeln in den Hydraulikkreislauf des Kupplungssystems verhindert wird.

Weitere Vorteile und Einzelheiten der Erfindung sind in den Patentansprüchen und in der Beschreibung erläutert und in den Figuren dargestellt. Es zeigt:
- Figur 1: eine schematische Darstellung einer Kupplungseinrichtung mit Ausrückvorrichtung und einem Ausgleichsbehälter sowie einer Bremsanlage, die ebenfalls an den Ausgleichsbehälter angeschlossen ist,
- Figur 2: eine schematische Darstellung des Ausgleichsbehälters mit einer oder mehreren Nachlaufleitungen.

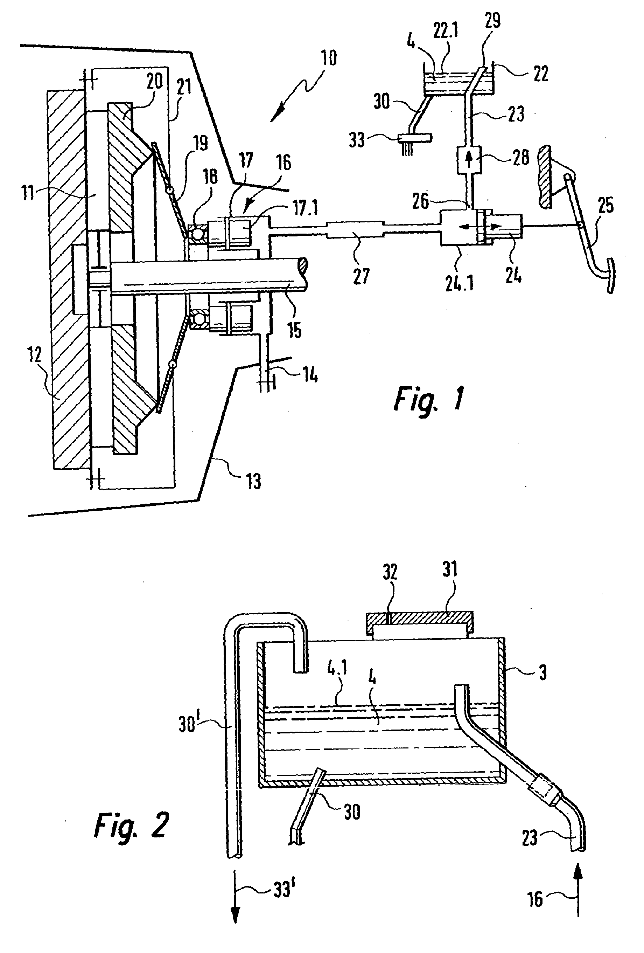

In der Zeichnung ist in Figur 1 ein Kupplungssystem 10 schematisch dargestellt, zu dem eine Kupplungsscheibe 11, ein Schwungrad 12, eine zentrale Ausrückeinrichtung 16 mit konzentrisch angeordnetem Ausrückzylinder 17, ein Ausrückkolben 17.1, ein Ausrücklager 18, mindestens ein Federelement 19, eine Kupplungsdruckplatte 20 sowie ein Kupplungsdeckel 21 gehören. Die Kupplung steht mit -einer Getriebeeingangswelle 15 eines in der Zeichnung nicht dargestellten Getriebes in Verbindung, wobei in der Zeichnung lediglich ein Getriebegehäuse 13 schematisch angedeutet ist.

An die Kupplungseinrichtung 10 kann eine Entlüftungsleitung 14 angeschlossen sein.

Der Zentralausrücker 16 steht über eine Druckmittelleitung 27 mit einem einen Kolben 24 aufweisenden Geberzylinder 24.1 in Verbindung. Der Kolben 24 des Geberzylinders 24.1 wird über ein Kupplungspedal 25 betätigt. Der Geberzylinder 24.1 weist eine sehr kleine Schnüffelbohrung bzw. Drosselöffnung 26 auf, an die eine Versorgungsleitung bzw. Nachlaufleitung 23 angeschlossen ist, deren Auslassstutzen bzw. Auslassöffnung 29 stets oberhalb eines Flüssigkeitsspiegels 22.1 endet, auch wenn dieser seinen maximalen Stand erreicht hat. An einen Ausgleichsbehälter 22 kann auch eine Versorgungs-, Aus- oder Nachlaufleitung 30 eines weiteren Geberzylinders eines Bremsgeräts angeschlossen sein. Die Einlassöffnung der Nachlaufleitung 30 liegt stets unterhalb eines Flüssigkeitsspiegels 4.1 einer Flüssigkeit 4 im Sammelbehälter bzw. Ausgleichsbehälter 22.

Bei Betätigung des Kupplungspedals 25 wird der Kolben 24 des Geberzylinders 24.1 mit seiner in der Zeichnung nicht dargestellten Dichtung an der Drosselbohrung bzw. sogenannten Schnüffelbohrung 26 vorbeibewegt, so dass dadurch die Versorgungsleitung bzw. Nachlaufleitung 23 von der übrigen Druckmittelleitung 27 abgetrennt wird und sich jetzt im Hydrauliksystem der Kupplungseinrichtung 10 ein Druck aufbauen kann. Der Geberzylinder 24.1 steht, wie bereits erwähnt, über die Druckmittelleitung 27, die als Stahlleitung oder als flexibler Schlauch ausgebildet sein kann, mit der Ausrückeinrichtung 16 in Druckmittelverbindung. Diese Ausrückeinrichtung 16 kann als Ringzylinder konzentrisch zur Eingangswelle des Getriebes angeordnet sein und die Kupplungsdruckplatte 20 betätigen. Durch diese Anordnung wird also sichergestellt, dass sich die Flüssigkeit aus der hydraulischen Einrichtung 10 nicht mit der Bremsflüssigkeit aus dem Bremskreislauf vermischt, so dass kein zusätzlicher Schmutz und auch kein Wasser die hydraulische Einrichtung 10 der Kupplung belastet. Tritt ein Verschleiß im Kupplungssystem auf, so kann das notwendige Arbeitsvolumen zur Betätigung der Kupplung aus der Nachlaufleitung 23 bzw. einem in die Nachlaufleitung 23 integrierten Behälter 28 entnommen werden.

Ein Behälter 3 kann mit einem Belüftungsdeckel 31 ausgestattet sein, in dem eine Belüftungsbohrung 32 vorgesehen ist. An den Behälter 3 können auch weitere Versorgungsleitungen, z. B. die Leitung 30', angeschlossen sein, die mit einem weiteren nicht dargestellten Geberzylinder verbunden sein kann.

### Bezugszeichenliste

- 3: Behälter
- 4: Flüssigkeit
- 4.1: Flüssigkeitsspiegel, max
- 10: Kupplung, Kupplungssystem
- 11: Kupplungsscheibe
- 12: Schwungrad
- 13: Getriebegehäuse
- 14: Entlüftungsleitung
- 15: Getriebeeingangswelle
- 16: Ausrückeinrichtung
- 17: Ausrückzylinder
- 17.1: Ausrückkolben
- 18: Ausrücklager
- 19: Tellerfeder
- 20: Kupplungsdruckplatte
- 21: Kupplungsdeckel
- 22: Ausgleichsbehälter
- 22.1: Flüssigkeitsspiegel
- 23: Versorgungsleitung, Nachlaufleitung
- 24: Kolben
- 24.1: Geberzylinder
- 25: Kupplungspedal
- 26: Drosselbohrung, Schnüffelbohrung
- 27: Druckmittelleitung, Versorgungsleitung
- 28: Behälter
- 29: Auslassöffnung, Stutzen
- 30: Versorgungsleitung, Aus- oder Nachlaufleitung
- 30': Leitung
- 31: Deckel
- 32: Belüftungsbohrung
- 33: Bremsgerät, Bremsanlage

## Patentansprüche

1. Behälter zur Aufnahme von Flüssigkeit zur Versorgung einer hydraulisch verstellbaren Kupplung und mindestens eines weiteren Aggregats, wobei die Kupplung über mindestens eine Versorgungsleitung mit dem Behälter verbunden ist,
**dadurch gekennzeichnet,**
**dass** der Behälter (3) zur Aufnahme von Flüssigkeit (4) über die Versorgungsleitung (23) und über einen in die Versorgungsleitung (23) integrierten Vorratsbehälter (28) mit dem Kupplungssystem (10) verbunden ist, wobei die Versorgungsleitung (23) derart an den Behälter (3) angeschlossen ist, dass Flüssigkeit über diese Versorgungsleitung (23) nur zufließen, jedoch nicht abfließen kann.

2. Behälter nach Anspruch 1,
**dadurch gekennzeichnet,**
**dass** die Versorgungsleitung (23) eine Auslassöffnung (29) aufweist, die oberhalb des höchsten Stands (4.1) der Flüssigkeit (4) endet, wobei mindestens eine weitere Versorgungsleitung (30) mit einer Bremsanlage (33) verbunden ist, wobei die Auslassöffnung der Versorgungsleitung (30) stets unterhalb des Flüssigkeitsspiegels (4.1) liegt.

3. Behälter nach Anspruch 1 oder 2,
**dadurch gekennzeichnet,**
**dass** der Vorratsbehälter (28) zwischen der Auslassöffnung (29) der Versorgungsleitung bzw. Nachlaufleitung (23) und einem Geberzylinder (24.1) zur Druckmittelversorgung der Kupplung (10) vorgesehen ist.

4. Behälter nach einem der vorhergehenden Ansprüche,
**dadurch gekennzeichnet,**
**dass** die Versorgungsleitung (23) über eine am Geberzylinder (24.1) vorgesehene Drosselöffnung (26) mit dem Geberzylinder (24.1) verbunden ist.

5. Behälter nach einem der vorhergehenden Ansprüche,
**dadurch gekennzeichnet,**
**dass** in der Versorgungsleitung (23) ein Einwegventil vorgesehen ist, das nur in einer Strömungsrichtung öffnet.

6. Behälter nach einem der vorhergehenden Ansprüche,
**dadurch gekennzeichnet,**
**dass** der in der Versorgungsleitung (23) integrierte Vorratsbehälter (28) als Leitungserweiterung ausgebildet ist, deren Fassungsvermögen der Flüssigkeits-Verlustmenge entspricht, die sich durch den Kupplungsverschleiß ergibt.

7. Behälter nach einem der vorhergehenden Ansprüche,
**dadurch gekennzeichnet,**
**dass** die Versorgungsleitung (23) über den Geberzylinder (24.1) mit einer Druckmittelleitung (27) verbunden ist, die zur Druckmittelversorgung mit einer hydraulisch betätigbaren Ausrückeinrichtung (16) für die Kupplung (10) verbunden ist, wobei der Querschnitt der Drosselbohrung (26) wesentlich kleiner ist als der Einlassquerschnitt der an die Ausrückeinrichtung (16) angeschlossenen Druckmittelleitung (27).

8. Behälter nach einem der vorhergehenden Ansprüche,
**dadurch gekennzeichnet,**
**dass** der Behälter (3) als Ausgleichsbehälter ausgebildet ist.
